# EUROPÄISCHE PATENTANMELDUNG

(11) **EP 3 593 783 A1**
(43) Veröffentlichungstag der Anmeldung: **15.01.2020**
(21) Anmeldenummer: 19172725.4
(22) Anmeldetag: 06.05.2019
(51) Int. Cl.: A61H 3/04, B62K 5/00, B62K 3/16

(54) **POLSTERKÖRPER FÜR EINE BEINAUFLAGE EINER FAHRBAREN GEHHILFE**

(30) Priorität: 10.07.2018 DE 102018116612
(71) Anmelder: Orthoscoot GmbH, 86356 Neusäß/Vogelsang (DE)
(72) Erfinder: Hertle, Andreas, 86482 Aystetten (DE); Heinrich, Frank, 86153 Augsburg (DE)
(74) Vertreter: Charrier Rapp & Liebau

(57) **Zusammenfassung**

Bei einem Polsterkörper für eine Beinauflage einer fahrbaren Gehhilfe, bestehend aus einem elastischen Formkörper, der zur Befestigung an einem Trägerteil der Beinauflage der Gehhilfe vorgerichtet ist und eine Oberseite, die im befestigten Zustand bei der Benutzung der Gehhilfe durch eine Person einem abgewinkelten Bein der Person zugewandt ist, sowie eine Unterseite aufweist, ist an der Oberseite (10) und/oder der Unterseite des Polsterkörpers eine Vertiefung (14; 114; 214) vorgesehen, wobei die Vertiefung (14; 114; 214) als Ausnehmung oder als Bereich mit reduzierter Dichte des Materials des Formkörpers ausgebildet ist und bei Auflage eines Beins einer Person auf dem Polsterkörper, insbesondere bei Kontakt des abgewinkelten Beins mit der Oberseite (10) des Polsterkörpers, ein vorspringender Bereich der Vorderseite des Knies und des angrenzenden Abschnitts des Unterschenkels in der Vertiefung (14; 114; 214) aufgenommen wird.

## Beschreibung

Die Erfindung betrifft einen Polsterkörper für eine Beinauflage einer fahrbaren Gehhilfe nach dem Oberbegriff des Anspruchs 1. Fahrbare Gehhilfen dienen dazu, einer an einem Bein oder Fuß verletzten Person eine Bewegung ohne Belastung des verletzten Beines bzw. Fußes zu ermöglichen, um eine Beeinträchtigung des Heilungsprozesses durch eine solche Belastung zu vermeiden. Die Fortbewegung mit einer solchen Gehhilfe ähnelt der Benutzung eines Tretrollers, wobei das verletzte Bein oder das Bein, dessen Fuß verletzt ist, zur Entlastung der Verletzung abgewinkelt mit dem Knie und dem Unterschenkel auf einer annähernd horizontalen länglichen Auflage liegt, so dass die Gehhilfe anstelle des verletzten Beines bzw. Fußes das Körpergewicht aufnimmt, wenn das verletzte Bein bzw. das Bein mit dem verletzten Fuß belastet wird. Aus der EP 3 173 059 A1 ist eine solche Gehhilfe bekannt, bei der die Neigung der Beinauflage um eine quer zur Fahrtrichtung liegende Achse verstellbar ist.

Die Beinauflage hat bei diesem Stand der Technik im Wesentlichen die Form einer im Querschnitt etwa halbkreisförmigen Rinne mit einer Längsachse und mit offenen Längsenden und setzt sich aus einer harten Schale und einem lösbar an der Oberseite der Schale befestigten elastischen Polsterkörper zusammen. Durch ihre Rinnenform zentriert die Auflage das auf ihr liegende Bein des Benutzers der Gehhilfe mittig in Fahrtrichtung der Gehhilfe. Der Polsterkörper, auf dessen Oberseite das Bein des Benutzers unmittelbar aufliegt, gibt beim Kontakt mit dem Bein elastisch nach und passt sich der Oberflächenform des Beines an. Durch die lösbare Befestigung des Polsters an der Schale, beispielsweise durch eine Klettverbindung, ergibt sich die Möglichkeit, das Polster bei Bedarf auszutauschen.

Ausgehend von diesem Stand der Technik liegt der Erfindung die Aufgabe zugrunde, einen Polsterkörper für eine Beinauflage einer fahrbaren Gehhilfe zu schaffen, welcher dem Benutzer der Gehhilfe einen verbesserten Komfort bietet.

Diese Aufgabe wird erfindungsgemäß durch einen Polsterkörper mit den Merkmalen des Anspruchs 1 gelöst. Vorteilhafte Ausgestaltungen und Weiterbildungen der Erfindung sind Gegenstand der Unteransprüche.

Erfindungsgemäß weist bei einem Polsterkörper für eine Beinauflage einer fahrbaren Gehhilfe, bestehend aus einem elastischen Formkörper, der zur Befestigung an einem Trägerteil der Beinauflage der Gehhilfe vorgerichtet ist und eine Oberseite aufweist, die im befestigten Zustand bei der Benutzung der Gehhilfe durch eine Person einem abgewinkelten Bein der Person zugewandt ist und mit diesem in Kontakt steht, die Oberseite des Polsterkörpers eine Vertiefung auf, die beim Kontakt der Oberseite mit einem abgewinkelten Bein einer Person zur Aufnahme vorspringender Bereiche der Vorderseite des menschlichen Knies und des angrenzenden Abschnitts des Unterschenkels geeignet ist.

Alternativ oder ergänzend ist es auch möglich, in der der Oberseite gegenüberliegenden Unterseite des Polsterkörpers eine Vertiefung vorzusehen, wobei in diesem Fall das Bein, insbesondere das Knie der Person bei Auflage auf der Oberseite des Polsterkörpers aufgrund der Vertiefung an der Unterseite im Polsterkörper einsinkt und dadurch darin aufgenommen wird, ohne dass ein hoher Druck auf das Knie ausgeübt wird.

Die Vertiefung in der Oberseite und/oder der Unterseite kann dabei entweder als Ausnehmung oder als Bereich mit reduzierter Dichte des Materials des Formkörpers ausgebildet sein. In jedem Fall wird bei einer bei Auflage eines Beins einer Person auf dem Polsterkörper, insbesondere bei Kontakt des abgewinkelten Beins mit der Oberseite des Polsterkörpers, ein vorspringender Bereich der Vorderseite des Knies und des angrenzenden Abschnitts des Unterschenkels in der Vertiefung aufgenommen, wodurch der auf das Knie entstehende Gegendruck vermindert wird.

Hierdurch wird die Entstehung von Druckspitzen an der Vorderseite besagter Körperteile vermieden, indem für dort vorhandene vorspringende Bereiche ein Hohlraum oder zumindest ein weicherer Bereich in dem Polsterkörper geschaffen wird, der die vorspringenden Bereiche des Beins, insbesondere des Knies, aufnehmen kann. Druckspitzen könnten bei längerem Gebrauch einer Gehhilfe, deren Beinauflage mit einem Polsterkörper ohne eine solche anatomische Anpassung seiner Oberseite ausgestattet ist, zu Druckschmerzen führen. Durch die erfindungsgemäße Formgebung des Polsterkörpers wird daher die Benutzung einer mit einem solchen Polsterkörper ausgestatteten fahrbaren Gehhilfe komfortabler.

Die Vertiefung sollte insbesondere geeignet sein, die durch die Patella und die Tuberositas Tibiae einer Person gebildeten Vorsprünge an der Vorderseite des abgewinkelten Beines einer Person aufzunehmen und so den auf diese Vorsprünge wirkenden Druck beim Kontakt des Polsterkörpersmit dem abgewinkelten Bein der Person zu reduzieren.

Bevorzugt ist die Form der Vertiefung symmetrisch zu einer senkrecht zur Oberfläche der Oberseite des Polsterkörpers verlaufenden Symmetrieebene. Hierdurch entspricht die Form der Vertiefung der Form der vorspringenden Bereiche der Vorderseite des menschlichen Knies und des angrenzenden Abschnitts des Unterschenkels, die ebenfalls annähernd symmetrisch ist.

Vorteilhafterweise hat die Oberseite des Polsterkörpers insgesamt die Form einer Rinne und die Vertiefung ist auf der konkaven Seite der Rinne ausgebildet. Durch diese Rinnenform wird eine laterale Zentrierung des auf der Oberseite des Polsterkörpers aufliegenden Unterschenkels des Benutzers einer Gehhilfe auch abseits der vorspringenden Bereiche bewirkt.

Vorzugsweise hat der Polsterkörper eine Längsrichtung, welche im an dem Trägerteil der Gehhilfe befestigten Zustand der Fahrtrichtung der Gehhilfe entspricht, und die Vertiefung erstreckt sich in der Längsrichtung von einem Ausgangspunkt auf der Oberseite des Polsterkörpers bis an eines seiner Enden, wo ihr Rand durch den Rand des Polsterkörpers gebildet wird. Hierdurch wird ein ausreichender Spielraum für die Aufnahme der einen der vorspringenden Bereiche bildenden Kniescheibe (Patella) geschaffen, deren Abstand von einem vorspringenden Bereich des Unterschenkels bei abgewinkeltem Knie in Abhängigkeit von der Körpergröße eines Menschen variiert.

Zweckmäßig ist eine Form der Vertiefung, bei der in einer senkrecht auf die Oberseite des Polsterkörpers gerichteten Ansichtsrichtung der seitliche Rand der Vertiefung die Form eines der Buchstaben U oder V oder einer symmetrischen Parabel mit einem Scheitelpunkt hat, wobei die offene Seite des Buchstabens U oder V oder der Parabel an demjenigen Ende des Polsterkörpers liegt, bis zu dem sich die Vertiefung erstreckt. Weitere Formen der Vertiefung sind denkbar und können den individuellen anatomischen Gegebenheiten eines Patienten erforderlichenfalls auch individuell angepasst werden, indem bspw. eine Vermessung der Form des Beins, insbesondere des Knies, mittels einem Scanner erfolgt und die Form des Polsterkörpers als Einzelanfertigung an die gemessene Form angepasst wird, so dass eine optimale Aufnahme des Beinbereichs, der beim Gebrauch der Gehhilfe auf der Oberseite des Polsterkörpers aufliegt, insbesondere des Knies, in der Vertiefung erzielt werden kann.

In einer anderen besonders zweckmäßigen Form der Vertiefung verbreitert sich in einer senkrecht auf die Oberseite des Polsterkörpers gerichteten Ansichtsrichtung die Vertiefung ausgehend von einem Ausgangspunkt auf der Oberseite, an dem sie beginnt, mit zunehmendem Abstand in der Längsrichtung von diesem Ort in seitlicher Richtung zunächst kontinuierlich, verengt sich dann kontinuierlich und verbreitert sich bis zum Ende des Polsterkörpers wieder kontinuierlich. Diese Form der Vertiefung kann in einer senkrecht auf seine Oberseite gerichteten Ansichtsrichtung einen ersten im wesentlichen mandelförmigen Abschnitt und einen zweiten im wesentlichen V-förmigen Abschnitt haben, die sich in der Längsrichtung in einem Überlappungsabschnitt so weit überlappen, dass eine zusammenhängende Vertiefung gebildet wird, wobei die offene Seite des V-förmigen Abschnitts an dem Ende des Polsterkörpers liegt. Der erste Abschnitt der Vertiefung ist in diesem Fall zur Aufnahme der Tuberositas Tibiae und der zweite Abschnitt zur Aufnahme der Patella vorgesehen, womit eine optimale Anpassung der Form und Lage der Vertiefung in Längs- und Querrichtung der Oberseite des Polsterkörpers an die anatomischen Merkmale eines am Kniegelenk abgewinkelten Beines gegeben ist.

Was das Tiefenprofil anbelangt, so ist die Tiefe der Vertiefung zweckmäßigerweise am Ort der Symmetrieebene am größten und nimmt mit zunehmendem Abstand von der Symmetrieebene kontinuierlich bis zum Rand der Vertiefung ab. Ferner weist die Vertiefung bevorzugt in einer durch die Symmetrieebene gebildeten Schnittebene zwei tiefere Abschnitte und einen zwischen diesen liegenden flacheren Abschnitt auf, wobei ein erster tieferer Abschnitt an einem Ausgangspunkt auf der Oberseite des Polsterkörpers beginnt, von dem aus die Tiefe zunächst kontinuierlich zunimmt, und der zweite tiefere Abschnitt sich bis zum Rand des Polsterkörpers erstreckt. Die Tiefe des zweiten tieferen Abschnitts nimmt von dem flacheren Abschnitt aus vorzugsweise zunächst kontinuierlich zu und bleibt dann bis zum Rand des Polsterkörpers annähernd gleich. Ein so gestaltetes Tiefenprofil der Vertiefung ist optimal an die anatomischen Merkmale eines am Kniegelenk abgewinkelten Beines angepasst.

Ein Ausführungsbeispiel der Erfindung wird nachfolgend anhand der Zeichnungen beschrieben. In diesen zeigt
- Fig. 1: eine Seitenansicht einer fahrbaren Gehhilfe,
- Fig. 2: eine perspektivische Ansicht eines erfindungsgemäßen Polsterkörpers für die Beinauflage der Gehhilfe von Fig. 1,
- Fig. 3: eine Ansicht des Polsterkörpers von Fig. 2 von hinten,
- Fig. 4: eine Längsschnittansicht des Polsterkörpers von Fig. 2,
- Fig. 5: eine Ansicht des Polsterkörpers von Fig. 2 von oben und
- Fig. 6: Ansichten von oben zweier anderer Ausführungsformen eines erfindungsgemäßen Polsterkörpers.

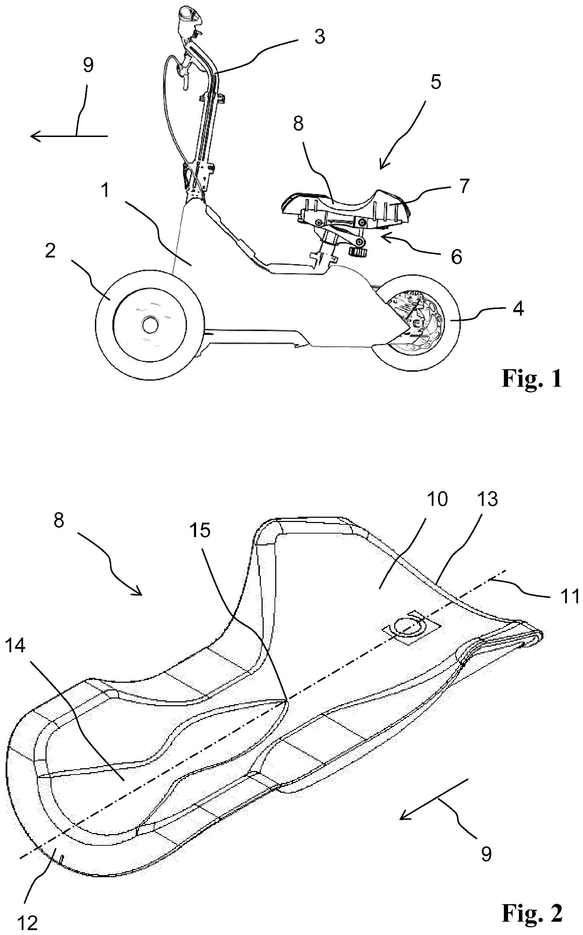

In Fig. 1 ist eine fahrbare Gehhilfe in einer Seitenansicht dargestellt. Von den Hauptkomponenten der Gehhilfe sind dort ein Rahmen 1, eines von zwei Vorderrädern 2, eine Lenkstange 3 zum Lenken der Vorderräder 2, ein Hinterrad 4 und eine Beinauflage 5 für das Knie und den Unterschenkel eines Beines einer Person, deren Mobilität durch die Gehhilfe erleichtert werden soll, zu erkennen. Die Beinauflage 5 ist durch eine Einstellvorrichtung 6 zum Einstellen ihrer Neigung in Fahrtrichtung mit dem Rahmen 1 verbunden. Sie besteht aus einem Trägerteil 7 und einem Polsterkörper 8, welcher auf der dem Bein des Benutzers zugewandten Oberseite des Trägerteils 7 befestigt ist. Die Fahrtrichtung der Gehhilfe ist in Fig. 1 durch einen Pfeil 9 gekennzeichnet.

Eine vergrößerte perspektivische Ansicht eines Polsterkörpers 8 gemäß der vorliegenden Erfindung zeigt Fig. 2. Die Richtung, welche bei einer Befestigung des Polsterkörpers 8 zu seinem Gebrauch an einer fahrbaren Gehhilfe deren Fahrtrichtung ist, ist auch in Fig. 2 durch einen Pfeil 9 gekennzeichnet. Wie in Fig. 2 zu erkennen ist, hat der Polsterkörper 8 im Wesentlichen die Form einer Rinne mit zwei offenen Enden. Beim Gebrauch des Polsterkörpers 8 an einer fahrbaren Gehhilfe liegt der Polsterkörper 8 in einem ebenfalls rinneförmigen Trägerteil 7 und ist dort vorzugsweise mittels einer oder mehrerer Klettverbindungen befestigt, deren Komponenten an der Oberseite des Trägerteils 7 und der Unterseite des Polsterkörpers 8 angeordnet sind. Alternativ zu Klettverbindungsbändern könnten auch andere Arten lösbarer Verbindungen wie Druckknöpfe, Schnapphaken oder magnetische Bänder sowie Kombinationen verschiedener Arten lösbarer Verbindungen vorgesehen sein.

Der Polsterkörper 8 besteht aus einem elastischen Formteil aus Kunststoff, das an seiner Oberfläche mit einer flüssigkeitsdichten und abwaschbaren Beschichtung versehen sein kann oder von einer abnehmbaren Hülle mit solchen Eigenschaften umgeben sein kann. Seine Elastizität ist an das durchschnittliche Gewicht eines Menschen so angepasst, dass er bei der Benutzung einer Gehhilfe durch den auf ihm aufliegenden Teil eines Beines des Benutzers leicht verformt wird.

Der Polsterkörper 8 hat eine Symmetrieebene, deren Schnittlinie mit der Oberfläche seiner Oberseite 10 in Fig. 2 als Symmetrielinie 11 strichpunktiert eingezeichnet ist. Die Richtung der Symmetrielinie 11 stellt die Längsrichtung des Polsterkörpers 8 dar, in welcher er eine deutlich größere Ausdehnung als quer zu dieser Richtung hat. Wenn der Polsterkörper 8 an einem waagrecht stehenden Trägerteil 7 einer Gehhilfe befestigt ist, dann entspricht die Richtung der Symmetrielinie 11 der Fahrtrichtung 9 der Gehhilfe. Quer zu dieser Richtung ist die Oberseite 10 des Polsterkörpers 8 konkav gewölbt, wodurch sich insgesamt die Form einer Rinne ergibt, in welcher bei der Benutzung einer mit dem Polsterkörper 8 ausgestatteten Gehhilfe das Knie und der Unterschenkel desjenigen Beines des Benutzers liegen, dessen Entlastung der Zweck der Gehhilfe ist. Hierbei liegt das Knie des Beines auf dem Polsterkörper 8 nahe dessen vorderem Ende 12 auf, während das untere Ende des Unterschenkels über das hintere Ende 13 des Polsterkörpers 8 hinausragt, so dass sich der Fuß des Benutzers dort jenseits des Polsterkörpers 8 befindet.

Wie in Fig. 2 erkennbar ist, weist die Oberseite 10 des Polsterkörpers 8 eine Vertiefung 14 auf, die sich ausgehend von einem nahe der Mitte des Polsterkörpers 8 liegenden Ausgangspunkt 15 bis ganz zum vorderen Ende 12 des Polsterkörpers 8 erstreckt und eine bezüglich der Symmetrieebene, in welcher die Symmetrielinie 11 liegt, symmetrische Form hat. Die Vertiefung 14 ist an die anatomische Form der Vorderseite des menschlichen Knies und des angrenzenden Abschnitts des Unterschenkels angepasst, d.h. sie ist dazu geeignet, dort vorhandene Vorsprünge in Form der Kniescheibe (Patella) und eines Höckers (Tuberositas Tibiae) am oberen Endabschnitt des Schienbeins aufzunehmen.

Diese Knochenvorsprünge würden bei einer gleichmäßigen Rinnenform der Oberseite 10 des Polsterkörpers 8 ohne Vorhandensein der Vertiefung 14, wie sie zwischen dem Ausgangspunkt 15 der Vertiefung 14 und dem hinteren Ende 13 des Polsterkörpers 8 vorliegt, beim Gebrauch einer mit dem Polsterkörper 8 ausgestatteten Gehhilfe durch den Kontakt des Beines mit dem Polsterkörper 8 am stärksten mit Druck beaufschlagt. Dadurch, dass besagte Vorsprünge in die Vertiefung 14 hineinragen können, wird der Druck gleichmäßiger auf die Vorderseite des Beines verteilt, was den Komfort für den Benutzer der Gehhilfe erhöht und bei längerer Benutzung das Auftreten von Druckschmerzen an besagten Knochenvorsprüngen verhindert.

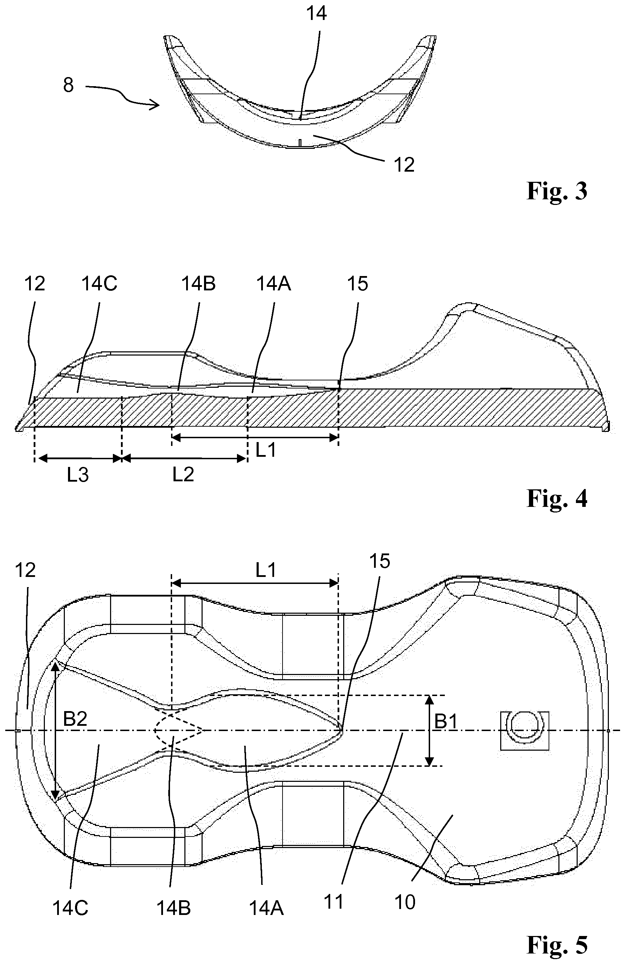

Eine Vorderansicht des Polsterkörpers 8 in einer parallel zu der Symmetrielinie 11 auf das vordere Ende 12 gerichteten Ansichtsrichtung zeigt Fig. 3. Wie darin zu erkennen ist, nimmt die Tiefe der Vertiefung 14 von deren seitlichem Rand aus zur Mitte hin kontinuierlich zu, d.h. der Grund der Vertiefung ist in der Ansicht von Fig. 3 konkav gewölbt. Ebenfalls gut erkennbar ist in Fig. 3, dass der Polsterkörper 8 insgesamt im Querschnitt die Form einer Rinne hat, die an beiden Enden offen ist. Durch diese Form und die laterale Symmetrie der Vertiefung 14 werden die in die Vertiefung 14 ragenden Vorsprünge an der Vorderseite des menschlichen Knies und des angrenzenden Abschnitts des Unterschenkels in lateraler Richtung, d.h. senkrecht zu der Symmetrieebene, in welcher die Symmetrielinie 11 liegt, auf der Oberseite 10 des Polsterkörpers 8 zentriert, was zusätzlich zentrierend auf das gesamte abzustützende Bein wirkt.

Wie aus der Längsschnittansicht entlang der Symmetrielinie 11 in Fig. 4 zu ersehen ist, variiert die Tiefe der Vertiefung 14 in der Längsrichtung des Polsterkörpers 8. Vom Ausgangspunkt 15 der Vertiefung 14 aus, der in der Längsrichtung des Polsterkörpers 8 ungefähr in dessen Mitte liegt, folgt in Richtung des vorderen Endes 12 auf einen ersten Abschnitt 14A, in dem die Tiefe zunächst kontinuierlich zunimmt und dann wieder abnimmt, ein flacherer zweiter Abschnitt 14B, in dem die Tiefe zunächst kontinuierlich abnimmt und dann wieder zunimmt, und auf diesen schließlich ein dritter Abschnitt 14C, in dem die Tiefe wieder kontinuierlich zunimmt und dann den überwiegenden Teil der Strecke bis zum vorderen Ende 12 des Polsterkörpers 8 konstant bleibt.

Dieses Tiefenprofil in Längsrichtung der Vertiefung 14 trägt der Tatsache Rechnung, dass die beiden von der Vertiefung 14 aufzunehmenden Vorsprünge an der Vorderseite des menschlichen Knies und des angrenzenden Abschnitts des Unterschenkels einen gewissen Abstand voneinander haben, wodurch sich ein Bereich ergibt, zu dessen Aufnahme in der Vertiefung 14 eine geringere Tiefe benötigt wird als zur Aufnahme jedes der beiden Vorsprünge. In diesem Bereich zwischen den beiden Vorsprüngen befindet sich das Kniescheibenband (Ligamentum Patellae), dessen Entlastung durch eine Vertiefung zwar ebenfalls als sinnvoll erscheint, doch genügt hierzu eine geringere Tiefe der Vertiefung 14.

Durch das zur Form der Vorderseite des von dem Polsterkörper 8 abzustützenden Beines annähernd komplementäre Tiefenprofil der Vertiefung 14 wird eine optimale Positionierung des Beines in der Längsrichtung des Polsterkörpers 8 bewirkt, indem die beiden Vorsprünge bei einer geringfügigen Fehlpositionierung in Längsrichtung dazu tendieren, in die beiden tieferen Abschnitte 14A bzw. 14C zu gleiten, wodurch die Lage des Beines relativ zu dem Polsterkörper 8 in dessen Längsrichtung stabilisiert wird.

Eine Ansicht des Polsterkörpers 8 von oben, d.h. in einer senkrecht zu der Oberseite 10 des Polsterkörpers 8 auf die Symmetrielinie 11 gerichteten Ansichtsrichtung zeigt Fig. 5. Wie darin erkennbar ist, erweitert sich die Vertiefung 14 ausgehend von ihrem Ausgangspunkt 15, der ungefähr in der Mitte des Polsterkörpers 8 liegt, zunächst kontinuierlich quer zu der Symmetrielinie 11, verengt sich dann in dieser Richtung kontinuierlich und erweitert schließlich in dieser Richtung wieder kontinuierlich bis zum vorderen Ende 12 des Polsterkörpers 8. Die Form in der Ansicht von Fig. 5 kann näherungsweise aufgefasst werden als die Überlappung eines mandelförmigen inneren Abschnitts 14A mit einem V-förmigen äußeren Abschnitt 14C, wobei das geschlossene Ende des mandelförmigen inneren Abschnitts 14A am Ausgangspunkt 15 der Vertiefung 14 ungefähr in der Mitte des Polsterkörpers 8 und die offene Seite des V-förmigen äußeren Abschnitts 14C am vorderen Ende 12 des Polsterkörpers 8 liegt.

In Fig. 5 sind die Ränder der zwei genannten Abschnitte 14A und 14C in deren Überlappungsbereich 14B innerhalb der Vertiefung 14 gestrichelt angedeutet, um die Mandelform und die V-Form der Abschnitte 14A und 14C in der Kombination mit dem tatsächlich vorhandenen Rand der Vertiefung 14 zu verdeutlichen. Tatsächlich gehen die Abschnitte 14A und 14C aber im Bereich der lateralen Verengung der Vertiefung 14, d.h. in deren Abschnitt 14B fließend ineinander über, so dass die dort gestrichelt dargestellten Randkonturen der Abschnitte 14A und 14C tatsächlich nicht vorhanden sind. Die in Fig. 5 mit 14A, 14B und 14C bezeichneten Abschnitte der Vertiefung 14 sind dieselben wie die in Fig. 4 so bezeichneten Abschnitte. Die Abschnitte 14A und 14C sind also tiefer als der zwischen ihnen liegende mittlere Abschnitt 14B, in dem die Vertiefung 14 lateral verengt ist. Hierbei ist der innere Abschnitt 14A zur Aufnahme der Tuberositas Tibiae und der äußere Abschnitt 14C zur Aufnahme der Patella des auf dem Polsterkörper 8 aufliegenden Beines des Benutzers einer Gehhilfe vorgesehen.

Um mit der Formgebung der Vertiefung 14 einem möglichst großen Benutzerkreis einen erhöhten Komfort zu bieten, sind folgende Abmessungen der einzelnen Abschnitte 14A, 14 B und 14C der Vertiefung 14 zweckmäßig bzw. bevorzugt:
Maximale Tiefe der inneren und äußeren Vertiefungsabschnitte 14A und 14C: 3-8 mm
Minimale Tiefe des mittleren Vertiefungsabschnitts 14B: 2-4 mm
Breite B1 des inneren Vertiefungsabschnitts 14A: 45-60 mm
Länge L1 des inneren Vertiefungsabschnitts 14A: 80-110 mm
Minimaler Abstand L2 der tiefsten Stellen der Abschnitte 14A und 14C: 50-70 mm
Länge L3 der tiefsten Stelle (Bereich konstanter Tiefe) des Abschnitts 14C: 40-60 mm
Maximale Breite B2 des Abschnitts 14C an seinem vorderen Ende 12: 50 - 80 mm

Die überwiegend konstante Tiefe in Längsrichtung und die V-Form des äußeren Vertiefungsabschnitts 14C entlang des überwiegenden Teils seiner Länge dienen dazu, Variationen des Durchmessers der Patella und ihres Abstandes von der Tuberositas Tibiae zwischen verschiedenen Benutzern zu bewältigen. Nachdem davon auszugehen ist, dass im allgemeinen mit zunehmender Körpergröße eines Menschen sowohl der Abstand der Patella von der Tuberositas Tibiae, als auch der Durchmesser der Patella zunimmt, kann bei einer Zentrierung der Tuberositas Tibiae in dem inneren Vertiefungsabschnitt 14A der äußere Vertiefungsabschnitt 14C mit der vorgesehenen Form die Patella in einem weiten Bereich ihres Abstandes und Durchmessers aufnehmen, so dass ein breiter Benutzerkreis mit unterschiedlichen anatomischen Abmessungen im Kniebereich von einer Reduktion des Drucks auf diese Vorsprünge profitiert.

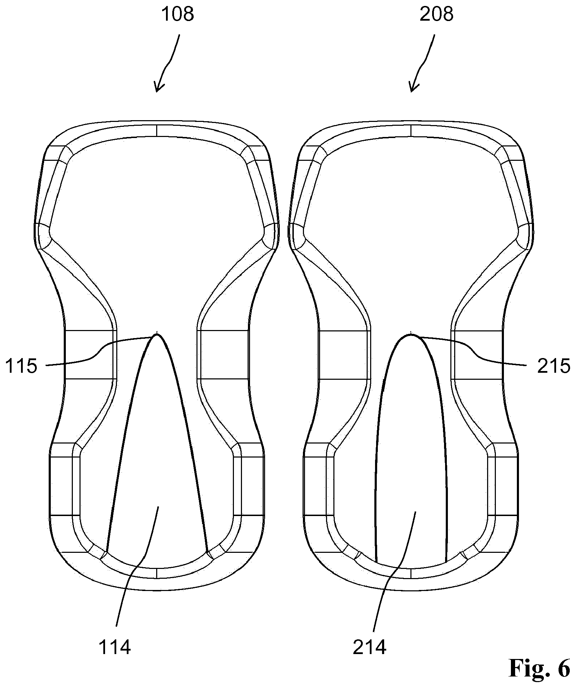

Zwei weitere Ausführungsformen eines erfindungsgemäßen Polsterkörpers 8, die gegenüber der vorausgehend beschriebenen ersten Ausführungsform etwas vereinfacht sind, zeigt Fig. 6. Bei dem dort links gezeigten Polsterkörper 108 hat die Vertiefung 114 insgesamt die Form des Buchstabens V mit einer abgerundeten Spitze und bei dem dort rechts gezeigten Polsterkörper 208 hat die Vertiefung 214 insgesamt die Form des Buchstabens U. Die Breite der Vertiefung erweitert sich also bei diesen beiden Ausführungsformen ausgehend von einem jeweiligen Ausgangspunkt 115 bzw. 215, der auch hier ungefähr in der Mitte des Polsterkörpers 108 bzw. 208 liegt, monoton und weist keine laterale Verengung auf.

Das Tiefenprofil entspricht aber auch bei den vereinfachten Ausführungsformen von Fig. 6 jeweils dem in Fig. 4 dargestellten Tiefenprofil der ersten Ausführungsform. Die laterale Zentrierungswirkung auf das Bein des Benutzers im inneren Bereich der Vertiefung 114 bzw. 214 ist hier etwas weniger ausgeprägt als bei der ersten Ausführungsform, doch werden auch hier die wesentlichen Merkmale der vorliegenden Erfindung verwirklicht.

## Patentansprüche

1. Polsterkörper (8; 108; 208) für eine Beinauflage einer fahrbaren Gehhilfe, bestehend aus einem elastischen Formkörper, der zur Befestigung an einem Trägerteil (7) der Beinauflage der Gehhilfe vorgerichtet ist und eine Oberseite (10) sowie eine Unterseite aufweist, wobei die Oberseite (10) bei der Benutzung der Gehhilfe durch eine Person einem Bein der Person zugewandt ist und mit diesem in Kontakt steht, **dadurch gekennzeichnet, dass** die Oberseite (10) und/oder die Unterseite des Polsterkörpers eine Vertiefung (14; 114; 214) aufweist, wobei die Vertiefung (14; 114; 214) als Ausnehmung oder als Bereich mit reduzierter Dichte des Materials des Formkörpers ausgebildet ist und bei Auflage eines Beins einer Person auf dem Polsterkörper, insbesondere bei Kontakt des abgewinkelten Beins mit der Oberseite (10) des Polsterkörpers, ein vorspringender Bereich der Vorderseite des Knies und des angrenzenden Abschnitts des Unterschenkels in der Vertiefung (14; 114; 214) aufgenommen wird.

2. Polsterkörper (8; 108; 208) nach Anspruch 1, **dadurch gekennzeichnet, dass** die Vertiefung (14; 114; 214) geeignet ist, die durch die Patella und die Tuberositas Tibiae gebildeten Vorsprünge an der Vorderseite eines abgewinkelten Beines einer Person aufzunehmen und so den auf diese Vorsprünge wirkenden Druck durch Aufnahme dieser Bereiche des abgewinkelten Beins der Person in der Vertiefung (14; 114; 214) des Polsterkörpers (8; 108; 208) zu reduzieren.

3. Polsterkörper (8; 108; 208) nach Anspruch 1 oder 2, **dadurch gekennzeichnet, dass** die Form der Vertiefung (14; 114; 214) symmetrisch zu einer senkrecht zur Oberfläche der Oberseite (10) des Polsterkörpers (8; 108; 208) verlaufenden Symmetrieebene ist.

4. Polsterkörper (8; 108; 208) nach einem der Ansprüche 1 bis 3, **dadurch gekennzeichnet, dass** seine Oberseite (10) insgesamt die Form einer Rinne hat und die Vertiefung (14; 114; 214) auf der konkaven Seite der Rinne ausgebildet ist.

5. Polsterkörper (8; 108; 208) nach einem der Ansprüche 1 bis 4, **dadurch gekennzeichnet, dass** er eine Längsrichtung hat, welche im an dem Trägerteil (7) der Gehhilfe befestigten Zustand der Fahrtrichtung der Gehhilfe entspricht, und dass sich die Vertiefung (14; 114; 214) in der Längsrichtung von einem Ausgangspunkt (15) an der Oberseite (10) des Polsterkörpers bis an eines seiner Enden (12) erstreckt und ihr Rand dort durch den Rand des Polsterkörpers (8; 108; 208) gebildet wird.

6. Polsterkörper (108; 208) nach Anspruch 5, **dadurch gekennzeichnet, dass** in einer senkrecht auf seine Oberseite (10) gerichteten Ansichtsrichtung der seitliche Rand der Vertiefung (114; 214) die Form eines der Buchstaben U oder V oder einer symmetrischen Parabel mit einem Scheitelpunkt hat, wobei die offene Seite des Buchstabens U oder V oder der Parabel an demjenigen Ende (12) des Polsterkörpers (108; 208) liegt, bis zu dem sich die Vertiefung (114; 214) erstreckt.

7. Polsterkörper (8) nach Anspruch 5, **dadurch gekennzeichnet, dass** in einer senkrecht auf seine Oberseite gerichteten Ansichtsrichtung die Vertiefung (14) ausgehend von einem Ausgangspunkt (15) an der Oberseite (10), an dem sie beginnt, mit zunehmendem Abstand in der Längsrichtung von diesem Augangspunkt (15) sich in seitlicher Richtung zunächst kontinuierlich verbreitert, dann kontinuierlich verengt und bis zum Ende (12) des Polsterkörpers (8) wieder kontinuierlich verbreitert.

8. Polsterkörper (8) nach Anspruch 7, **dadurch gekennzeichnet, dass** in einer senkrecht auf seine Oberseite (10) gerichteten Ansichtsrichtung die Vertiefung (14) einen ersten im wesentlichen mandelförmigen Abschnitt (14A) und einen zweiten im wesentlichen V-förmigen Abschnitt (14C) hat, die sich in der Längsrichtung in einem Überlappungsabschnitt (14C) so weit überlappen, dass eine zusammenhängende Vertiefung gebildet wird, und dass die offene Seite des V-förmigen Abschnitts (14C) an dem Ende des Polsterkörpers (8) liegt.

9. Polsterkörper (8; 108; 208) nach einem der Ansprüche 3 bis 8, **dadurch gekennzeichnet, dass** die Tiefe der Vertiefung (14; 114; 214) am Ort der Symmetrieebene am größten ist und mit zunehmendem Abstand von der Symmetrieebene kontinuierlich bis zum Rand der Vertiefung (14; 114; 214) abnimmt.

10. Polsterkörper (8; 108; 208) nach einem der Ansprüche 3 bis 9, **dadurch gekennzeichnet, dass** die Vertiefung (14; 114; 214) in einer durch die Symmetrieebene gebildeten Schnittebene zwei tiefere Abschnitte (14A, 14C) und einen zwischen diesen liegenden flacheren Abschnitt (14B) aufweist, wobei ein erster tieferer Abschnitt (14A) an einem Ausgangspunkt (15) auf der Oberseite (10) des Polsterkörpers (8) beginnt, von dem aus die Tiefe zunächst kontinuierlich zunimmt, und der zweite tiefere Abschnitt (14C) sich bis zum Rand des Polsterkörpers (8) erstreckt.

11. Polsterkörper (8; 108; 208) nach Anspruch 10, **dadurch gekennzeichnet, dass** die Tiefe des zweiten tieferen Abschnitts (14C) von dem flacheren Abschnitt (14B) aus zunächst kontinuierlich zunimmt und dann bis zum Rand des Polsterkörpers (8) annähernd gleich bleibt.

12. Polsterkörper (8; 108; 208) nach Anspruch 10 oder 11, **dadurch gekennzeichnet, dass** die maximale Tiefe des ersten und des zweiten tieferen Vertiefungsabschnitts (14A, 14C) jeweils 3-8 mm und die minimale Tiefe des flacheren Vertiefungsabschnitts (14B) 2-4 mm beträgt.

13. Polsterkörper (8; 108; 208) nach einem der Ansprüche 10 bis 12, **dadurch gekennzeichnet, dass** die Länge (L1) des ersten tieferen Vertiefungsabschnitts (14A) in Längsrichtung des Polsterkörpers (8) 80-110 mm und seine Breite (B1) quer zur Längsrichtung 45-60 mm beträgt.

14. Polsterkörper (8; 108; 208) nach einem der Ansprüche 10 bis 13, **dadurch gekennzeichnet, dass** der minimale Abstand (L2) der tiefsten Stellen der tieferen Vertiefungsabschnitte (14A, 14C) 50-70 mm, die Länge (L3) der tiefsten Stelle des zweiten Vertiefungsabschnitts (14C) 40-60 mm und die maximale Breite (B2) des zweiten tieferen Vertiefungsabschnitts (14C) am vorderen Ende (12) des Polsterkörpers (8) 50-80 mm beträgt.

15. Beinauflage einer fahrbaren Gehhilfe zur Abstützung eines am Knie abgewinkelten Beines einer Person, bestehend aus einem Trägerteil (7), welches an seiner Unterseite an einem Teil des Rahmens (1) der Gehhilfe befestigbar ist, und aus einem an einer Oberseite des Trägerteils (7) befestigbaren Polsterkörper (8; 108; 208), auf dessen Oberseite (10) das abgewinkelte Bein der Person bei der Benutzung der Gehhilfe aufliegt, **dadurch gekennzeichnet, dass** der Polsterkörper (8; 108; 208) ein Polsterkörper (8; 108; 208) nach einem der Ansprüche 1 bis 14 ist.
